# EUROPÄISCHE PATENTSCHRIFT

(11) **EP 1 061 197 B1**
(45) Veröffentlichungstag und Bekanntmachung des Hinweises auf die Patenterteilung: **10.10.2001**
(21) Anmeldenummer: 99110056.1
(22) Anmeldetag: 21.05.1999
(51) Int. Cl.: E04D 3/36, H02G 13/00

(54) **Vorrichtung zum Befestigen von Dachelementen an einer Unterlage**
Arrangement for connecting roof elements to a substructure
Dispositif de fixation d'un élément de toiture à une structure de base

(43) Veröffentlichungstag der Anmeldung: 20.12.2000
(73) Patentinhaber: KOCH Membranen GmbH & Co. KG Kunststofftechnologie, 83253 Rimsting/Chiemsee (DE); b/s/t Technische Entwicklungs- und Vertriebsgesellschaft mbH, 83253 Rimsting/Chiemsee (DE)
(72) Erfinder: Schöll, Maximilian, 83026 Rosenheim (DE); Zimmermann, Michael, 83530 Schnaitsee/Harpfing (DE); Koch, Hans-Jürgen, 83253 Rimsting (DE)
(74) Vertreter: Strobel, Wolfgang, Dipl.-Ing.

(56) Entgegenhaltungen:
- DE-A- 2 905 068
- DE-C- 4 116 193

## Beschreibung

Die vorliegende Erfindung betrifft eine Vorrichtung zum Befestigen von Dachelementen, wie Blitzableitern, an einer Unterlage, beispielsweise an der Außenseite eines Daches bzw. einer Fassade, nach dem Oberbegriff des Anspruchs 1.

Im Bereich des Hochbaus hat in den letzten Jahren eine verstärkte Tendenz zu Foliendächern eingesetzt, bei denen insbesondere als Außenhaut Folienabdichtungen verwendet werden. Zur Befestigung dieser Folienschichten an der Außenhaut des Daches wurden Befestigungsvorrichtungen vorgeschlagen, die im wesentlichen tellerförmig ausgebildet sind.

So ist aus der DE 29 05 068 C2 eine Vorrichtung zum Befestigen einer Abdichtungsschicht an einer Unterlage, beispielsweise einer Folie an der Außenseite eines Daches, mit Hilfe von Scheiben oder Tellern und Befestigungsorganen, bekannt, wobei das Befestigungsorgan in der Mitte der Scheibe angreift und durch die Abdichtungsschicht in die Unterlage so weit eingetrieben ist, daß der Teller gegen die Abdichtungsschicht bzw. äußere Folie drückt. Zwischen dem scheibenförmigen Abstützelement, d. h. dem Befestigungsteller und der Außenseite des Daches ist eine Abdichtungsschicht vorgesehen und im Mittenbereich des scheibenförmigen Abstützelements ist eine Erhöhung vorgesehen, die sich entgegengesetzt zu dem Befestigungsorgan erstreckt.

Wie bekannt, benötigen Hausdächer an ihrer Oberseite weitere Zusatzelemente, wie beispielsweise Blitzableiter, Klimaanlagen-Leitungen, Schnee- und Kies- fangleisten, Leitungen von Solaranlagen usw., die herkömmlicherweise mit aufwendigen Mitteln am Dach befestigt werden müssen.

Aus der DE 40 40 135 C1 ist eine Befestigung einer Dachabdichtungsbahn bekannt, die ebenfalls einen Halteteller aufweist, der mittels eines Befestigungsorgans an dem Dach befestigt ist und eine Einrichtung aufweist, die zur Halterung eines Befestigungsmittels für ein weiteres Bauteil, beispielsweise für einen Dachaufbau, dienen kann.

Die Erhöhung ist dabei als Vierkantzapfen ausgebildet, in dessen Zentrum ausgehend von der Oberseite ein Sackloch mit einem Innengewinde vorgesehen ist, in das ein entsprechendes Außengewinde der Halteeinrichtung eingefügt werden kann.

Dies hat jedoch erhebliche Nachteile. Zunächst muß in dem Halteteller, der im wesentlichen aus Kunststoff ist, das Innengewinde ausgebildet werden, was fertigungstechnisch erheblichen Aufwand bedeutet. Weiterhin muß die Halteeinrichtung ein entsprechendes, paßgenaues Außengewinde aufweisen, das in das Innengewinde eingeschraubt werden kann, wobei zudem entsprechend paßgenaue Außenflächen sowohl an der Halteeinrichtung als auch an dem Vierkantzapfen ausgebildet werden müssen, damit ein sattes Aufliegen der Halteeinrichtung und damit eine entsprechend kräfteaufnehmende Verbindung zwischen der Halteeinrichtung und dem Halteteller sichergestellt wird.

Weiterhin ergibt sich nachteilig, daß auch die Länge des Außengewindes und dessen Lage zur Halteeinrichtung einerseits bzw. die Lage des Innengewindes im Halteteller andererseits, exakt vorbestimmt sein müssen, da durch Eindrehen der Halteeinrichtung in den Halteteller eine exakte winkelige Anordnung vorbestimmt werden muß, da die Halteeinrichtung in der Regel Einrichtungen zur Aufnahme von länglichen Substraten, wie beispielsweise Blitzableiterdrähten, aufweist. Eine winkelige Verdrehung der länglichen Aufnahme-elemente muß somit gewährleistet werden damit die länglichen Substrate oder Gegenstände richtig aufgenommen werden können, wobei einerseits ein Überdrehen des Außengewindes in dem Innengewinde zu keiner sicheren Befestigung der Halteeinrichtung am Halteteller führt und andererseits ein zu geringes Eindrehen eine satte Auflage der beiden einander gegenüberliegenden Außenflächen zwischen Halteeinrichtung und Halteteller bzw. dessen Vierkantvorsprung gemäß DE 40 40 135 C1 verhindert.

Der vorliegenden Erfindung liegt deshalb die Aufgabe zugrunde, eine Vorrichtung zum Befestigen von Elementen, insbesondere Dachelementen an einer Unterlage, beispielsweise an der Außenseite eines Daches bzw. einer Fassade zu schaffen, bei der auf einfache Weise die Lage der Halteeinrichtung gegenüber dem scheibenförmigen Abstützelement (Halteteller) auf einfache Weise festgelegt werden kann, und auf einfache Weise beide Elemente miteinander verbunden werden können.

Diese Aufgabe wird durch die Merkmale des Anspruchs 1 gelöst.

Dadurch, daß die Halteeinrichtung mit dem scheibenförmigen Abstützelement mittels Verschweißung, Verklebung oder Vulkanisierung verbunden ist, ergibt sich sowohl eine großflächige sichere Verbindung zwischen Halteeinrichtung und scheibenförmigen Abstützelement als auch eine leicht vorbestimmbare lagerichtige Anordnung der Halteeinrichtung in bezug auf die aufzunehmenden und zu haltenden Elemente, wie Blitzableiterdrähte und dergleichen.

Besonders vorteilhaft ergibt sich dabei, daß bisher bekannte scheibenförmige Abstützelemente, die sogenannten "Halteteller" unverändert weiterverwendet werden können, was eine große Einsparung hinsichtlich neuer Gießformen ermöglicht. Somit muß nur noch eine entsprechend ausgestaltete Halteeinrichtung geschaffen werden, und besondere Eindrehwerkzeuge, wie sie im Stand der Technik notwendig sind, entfallen.

Mit weiterem besonderen Vorteil kann die erfindungsgemäße Vorrichtung auch auf geneigten Dächern oder an Fassaden angeordnet werden, insbesondere ist ein Verschieben/Umfallen der Leitungshalter durch Windeinwirkung oder mechanische Einwirkung im wesentlichen ausgeschlossen.

Weiterhin ergibt sich gegenüber herkömmlichen Leitungshaltern, die lediglich auf die Außenhaut bzw. die Dachdichtungsbahn aufgebracht werden durch die hervorragende Verbindung des Haltetellers mit dem Dach eine besonders gute mechanische Verbindung. Zudem tritt bei einer Befestigung auf geneigten Dächern bzw. Fassaden durch die Schraubverbindung des scheibenförmigen Abstützelements mit dem Dach bzw. der Fassade keine Zugkraft an der Dachdichtungsbahn auf.

Mit besonderem Vorteil wird die Verschweißung aus Flüssigfolie gebildet, wobei insbesondere vorteilhafterweise das gleiche Schweißmittel bzw. Klebemittel verwendet werden kann, das zum Verschweißen des scheibenförmigen Abstützelements mit der Dachdichtungsbahn verwendet wird.

Alternativ kann die Verschweißung mittels Wärmeimpuls-, Hochfrequenz-, Warmgas (Heißluft)-, und/oder Heizkeilschweißen gebildet sein. Die einzelnen Verschweißungsarten sind dem Fachmann an sich bekannt.

Vorteilhafterweise weist die Halteeinrichtung eine kerbförmige Ausnehmung zur Aufnahme eines länglichen Gegenstandes auf, so daß dieser längliche Gegenstand, beispielsweise ein Blitzableiterdraht, auf einfache Weise in der Halteeinrichtung aufgenommen werden kann.

Dabei weist besonders vorteilhaft die Halteeinrichtung eine kerbförmige Schnapprasteinrichtung zur Aufnahme eines länglichen Gegenstandes auf, so daß durch einfaches Einschnappen in der Halteeinrichtung der längliche Gegenstand darin dauerhaft festgelegt werden kann. Darüber hinaus kann er unter einem entsprechend erhöhten Kraftaufwand auch wieder aus dieser Halteeinrichtung entfernt werden und gegebenenfalls ausgetauscht werden.

Das Material des scheibenförmigen Abstützelements und/oder der Halteeinrichtung kann vorteilhafterweise PVC-, EVA-, CPE-Material, Polyolefine oder Elastomere sein.

Weitere Einzelheiten, Merkmale und Vorteile der vorliegenden Erfindung ergeben sich aus der nachfolgenden Beschreibung unter Bezugnahme auf die Zeichnung. Darin zeigt:
- Figur 1: eine Schnittansicht durch eine erfindungsgemäße Vorrichtung, die mit einem darunterliegenden Dachaufbau verbunden und gegenüber der Dachabdichtungsaußenhaut abgedichtet ist;
- Figur 2: eine Draufsicht auf eine bevorzugte Ausführungsform der erfindungsgemäßen Halteeinrichtung und;
- Figur 3: eine Schnittansicht entlang der Linie A-A von Figur 2.

In den Figuren sind die gleichen Teile mit den gleichen Bezugsziffern bezeichnet.

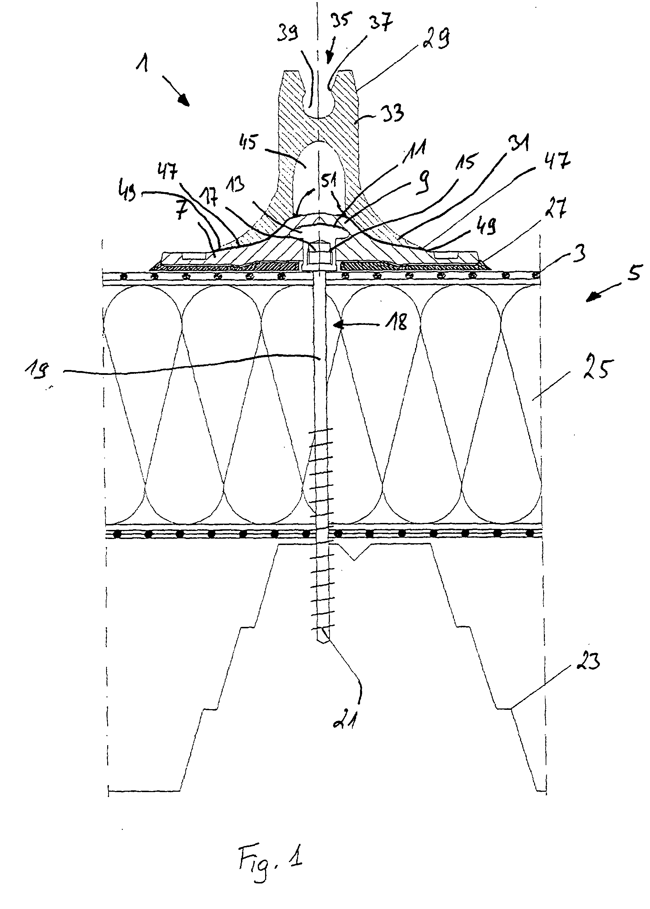

In Figur 1 ist eine erfindungsgemäße Vorrichtung 1 zum Befestigen einer Abdichtungsschicht 3 an einer Unterlage 5 dargestellt, wobei in der in Figur 1 dargestellten Schnittansicht auch der Aufbau der Unterlage 5 ersichtlich ist.

Die erfindungsgemäße Vorrichtung 1 weist ein scheibenförmiges Abstützelement 7 auf, das von herkömmlicher Ausgestaltung sein kann, wie beispielsweise in der DE 29 05 068 C2 beschrieben. Das scheibenförmige Abstützelement 7, das auch "Halteteller" genannt wird, weist in seinem Mittenbereich eine Erhöhung 9 auf, die eine sacklochförmige Ausnehmung 11 aufweist, in der ein Gewindeeinsatz 13 eingesetzt ist. Der Gewindeeinsatz 13 weist ein Innengewinde 15 auf, das zur Aufnahme eines entsprechenden Gewindebolzens 17 dient.

Der Gewindebolzen 17 ist Teil eines Befestigungsorgans 18, das eine Befestigungsstange 19 aufweist, die an dem Gewindebolzen 17 angeformt ist. An dem dem Gewindebolzen 17 entgegengesetzten Endbereich der Befestigungsstange 19 ist ein Verankerungsaußengewinde 21 ausgebildet. Mit diesem Verankerungsaußengewinde 21 wird der Halteteller 7 im Dachaufbau bzw. der Unterlage 5, die beispielsweise ein Stahltrapezblech 23 und eine Wärmedämmung 25 aufweisen kann, fest verankert.

Zur Abdichtung des Haltetellers 7 auf der Abdichtungsschicht 3 ist zwischen dem Halteteller 7 und der Abdichtungsschicht 3 eine weitere Dichtungsschicht 27 vorgesehen, die beispielsweise aus einer PVC Flüssigfolie gebildet ist und ein Eindringen von Feuchtigkeit in den Mittenbereich des scheibenförmigen Abstützelements 7 verhindert. Das Abstützelement 7 ist beispielsweise aus hartem PVC-Material gebildet.

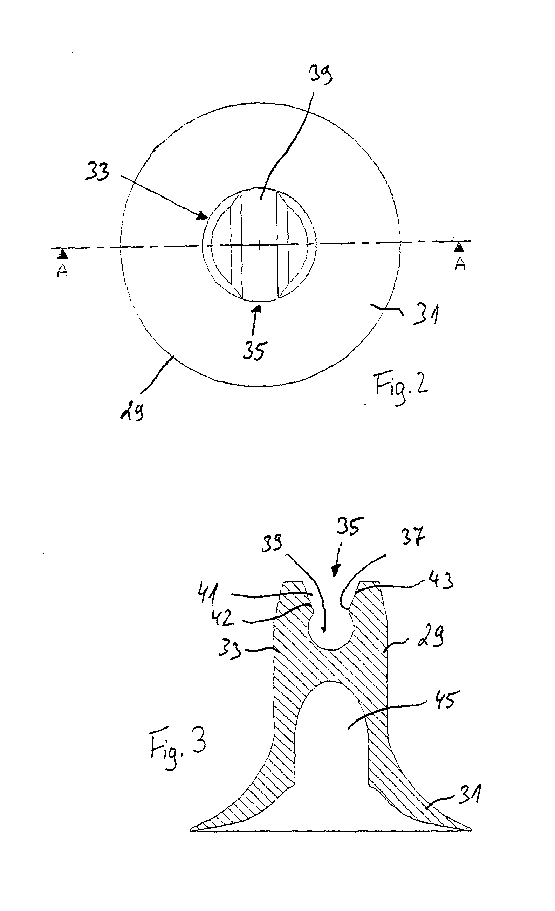

Die erfindungsgemäße Vorrichtung 1 weist weiterhin eine Halteeinrichtung 29 auf, die in Figur 2 in Draufsicht und in Figur 3 in Schnittansicht gemäß der Linie A-A von Figur 2 dargestellt ist. Die Halteeinrichtung 29 kann ebenfalls aus hartem PVC-Material gebildet sein.

Die Halteeinrichtung 29 weist einen Flanschbereich 31 auf, der im wesentlichen kreisförmig ausgebildet ist, und weist einen daran einstückig angeformten Halteabschnitt 33 auf. Dieser Halteabschnitt 33 erstreckt sich im wesentlichen senkrecht nach oben und weist eine von oben zugängige kerbförmige Ausnehmung 35 auf. Die kerbförmige Ausnehmung ist beispielsweise in Form einer Schnapprasteinrichtung 37 ausgebildet, wobei sie eine zur Aufnahme eines kreisquerschnittsförmigen länglichen Gegenstandes einen im wesentlichen im Querschnitt kreisförmigen Lagerabschnitt 39 aufweist, der sich nach oben verjüngt, und an den sich ein Aufweitungsabschnitt 41 mit nach außen sich öffnenden Seitenwänden 42 und 43 anschließt.

Die Halteeinrichtung weist weiterhin eine Vertiefung 45 auf, die sich von dem Flanschbereich 31 in das Innere des Halteabschnitts 33 erstreckt.

Wie aus Figur 1 ersichtlich, weist der Flanschbereich 31 eine der Außenflächen des scheibenförmigen Abstützelements 7 entsprechende Kontur auf, und die Verbindung zwischen Halteeinrichtung 29 und scheibenförmigem Abstützelement 7 wird mittels Verschweißen oder Verkleben mit Hilfe einer entsprechenden Flüssigfolie 47 ermöglicht. Die Flüssigfolie 47 oder Paste ist vorzugsweise dieselbe, wie die Flüssigfolie der Abdichtungsschicht 27.

Wie auch ersichtlich, läuft die Flüssigfolie an den Rändern des Flanschbereichs sowohl außen bei 49 als auch innen bei 51 in Form eines Randwulstes um.

Das Anbringen der Halteeinrichtung 29 ist ersichtlich äußerst einfach, da der Flanschbereich 31 bzw. die entsprechende Oberfläche des scheibenförmigen Abstützelements 7 mit Flüssigfolie 47 bedeckt wird und die Halteeinrichtung 29 nach Ausrichten der kerbförmigen Ausnehmung 35 auf das scheibenförmige Abstützelement 7 gesetzt wird. Eine Nachjustierung bzw. ein falsches Anordnen der kerbförmigen Ausnehmung 35 durch Drehen der Vorrichtung, wie beim Stand der Technik, wird damit sicher vermieden.

Mit der vorliegenden Erfindung wird somit eine einfache und einfach anzubringende Vorrichtung zum Befestigen von Dachelementen oder sonstigen Elementen an einer Unterlage, beispielsweise an der Außenseite eines Daches bzw. einer Fassade geschaffen, wobei die Halteeinrichtung zur Aufnahme von zusätzlichen Elementen, wie Blitzableitern, Leitungen für Solaranlagen, Schneefangelementen oder dergleichen dient.

Dabei ist die vorliegende Erfindung nicht auf die beschriebene Ausführungsform beschränkt, Insbesondere kann die Halteeinrichtung andere Haltevorrichtungen, wie Kappen, Kabelbinder, Schlauchschellen, etc. aufweisen.

## Patentansprüche

1. Vorrichtung (1) zum Befestigen von Dachelementen an einer Unterlage (5), beispielsweise an der Außenseite eines Daches bzw. einer Fassade, mit einem scheibenförmigen Abstützelement (7) und einem Befestigungsorgan (18), welches in der Mitte des scheibenförmigen Abstützelements (7) angreift und zum Eingriff mit der Dachschicht und zur Befestigung an dieser dient, wobei zwischen dem scheibenförmigen Abstützelement (7) und der Außenseite des Daches die Abdichtungsschicht (3) vorgesehen ist, und im Mittenbereich des scheibenförmigen Abstützelements (7) eine Erhöhung (9) vorgesehen ist, die sich entgegengesetzt zu dem Befestigungsorgan (18) erstreckt, und wobei eine Halteeinrichtung (29) zum Halten von Dachelementen vorgesehen ist, die (29) im wesentlichen im Bereich der Erhöhung (9) angeordnet ist, **dadurch gekennzeichnet, daß** die Halteeinrichtung (29) mit dem scheibenförmigen Abstützelement (7) mittels Verschweißung, Verklebung oder Vulkanisierung verbunden ist.

2. Vorrichtung nach Anspruch 1, **dadurch gekennzeichnet, daß** die Verschweißung aus Flüssigfolie gebildet ist.

3. Vorrichtung nach Anspruch 1, **dadurch gekennzeichnet, daß** die Verschweißung mittels Wärmeimpuls-, Hochfrequenz-, Warmgas, und/oder Heizkeilschweißen gebildet ist.

4. Vorrichtung nach einem der Ansprüche 1 bis 3, **dadurch gekennzeichnet, daß** die Halteeinrichtung (29) eine kerbförmige Ausnehmung (35) zur Aufnahme eines länglichen Gegenstandes aufweist.

5. Vorrichtung nach einem der Ansprüche 1 bis 4, **dadurch gekennzeichnet, daß** die Halteeinrichtung (29) eine Schnapprasteinrichtung (37) zur Aufnahme eines Gegenstandes aufweist.

6. Vorrichtung nach einem der Ansprüche 1 bis 5, **dadurch gekennzeichnet, daß** das scheibenförmige Abstützelement (7) und/oder die Halteeinrichtung (29) aus PVC-, EVA-, CPE-Material, Polyolefinen oder Elastomeren gebildet ist.

## Claims

1. Arrangement (1) for fastening roof elements on an underlying surface (5), for example on the outside of a roof or of a facade, having a plate-like supporting element (7) and a fastening element (18) which acts in the centre of the plate-like supporting element (7) and serves for engagement with the roof layer and for fastening on the same, it being the case that the sealing layer (3) is provided between the plate-like supporting element (7) and the outside of the roof, and an elevation (9) extending in the opposite direction to the fastening element (18) is provided in the central region of the plate-like supporting element (7), and a retaining device (29) is provided for retaining roof elements, said device (29) being arranged essentially in the region of the elevation (9), **characterized in that** the retaining device (29) is connected to the plate-like supporting element (7) by means of welding, adhesive bonding or vulcanizing.

2. Arrangement according to Claim 1, **characterized in that** the welding is carried out using a liquid film.

3. Arrangement according to Claim 1, **characterized in that** the welding method used is thermal impulse welding, high-frequency welding, hot-gas welding and/or heated wedge welding.

4. Arrangement according to one of Claims 1 to 3, **characterized in that** the retaining device (29) has a notch-like cutout (35) for accommodating an elongate object.

5. Arrangement according to one of Claims 1 to 4, **characterized in that** the retaining device (29) has a snap-action latching device (37) for accommodating an object.

6. Arrangement according to one of Claims 1 to 5, **characterized in that** the plate-like supporting element (7) and/or the retaining device (29) are/is formed from PVC, EVA, CPE material, polyolefins or elastomers.

## Revendications

1. Dispositif (1) pour la fixation d'éléments de toiture sur une sous-couche (5), par exemple sur le côté extérieur d'une toiture ou d'une façade, doté d'un élément de soutien (7) en forme de disque et d'un organe de fixation (18) qui s'engage au milieu de l'élément dé soutien (7) en forme de disque et qui sert à l'engagement avec la couche de toiture et à la fixation sur cette dernière, tandis qu'entre l'élément de soutien (7) en forme de disque et le côté extérieur de la toiture est prévue la couche d'étanchéité (3) et que dans la région centrale de l'élément de soutien (7) en forme de disque est prévu un rehaussement (9) qui s'étend en opposition à l'organe de fixation (18), et qu'un dispositif de retenue (29) pour retenir des éléments de toiture est prévu, lequel (29) est disposé essentiellement dans la zone du rehaussement (9), **caractérisé en ce que** le dispositif de retenue (29) est relié à l'élément de soutien (7) en forme de disque par soudage, collage ou vulcanisation.

2. Dispositif selon la revendication 1, **caractérisé en ce que** la soudure est formée d'une feuille fusible.

3. Dispositif selon la revendication 1, **caractérisé en ce que** la soudure est formée par soudage à impulsions thermiques, à haute fréquence, à gaz chaud et/ou à la panne chauffée.

4. Dispositif selon l'une des revendications 1 à 3, **caractérisé en ce que** le dispositif de retenue (29) présente une découpe (35) en forme d'entaille pour la réception d'un objet allongé.

5. Dispositif selon l'une des revendications 1 à 4, **caractérisé en ce que** le dispositif de retenue (29) présente un dispositif d'accrochage élastique (37) pour la réception d'un objet.

6. Dispositif selon l'une des revendications 1 à 5, **caractérisé en ce que** l'élément de soutien (7) en forme de disque et/ou le dispositif de retenue (29) sont réalisés en un matériau de PVC, EVA, CPE, en polyoléfines ou en élastomères.
